# EUROPÄISCHE PATENTSCHRIFT

(11) **EP 0 808 784 B1**
(45) Veröffentlichungstag und Bekanntmachung des Hinweises auf die Patenterteilung: **15.11.2000**
(21) Anmeldenummer: 97108148.4
(22) Anmeldetag: 20.05.1997
(51) Int. Cl.: B65G 47/38

(54) **Kippschalenanordnung für Sortierförderanlagen**
Tilting tray arrangement for sorting conveyor device
Agencement des plateaux basculants pour convoyeur de triage

(30) Priorität: 22.05.1996 DE 19620635
(43) Veröffentlichungstag der Anmeldung: 26.11.1997
(73) Patentinhaber: Fraunhofer-Gesellschaft zur Förderung der angewandten Forschung e.V., 80636 München (DE)
(72) Erfinder: Böcker, Thorsten, Dipl. Ing., 53619 Rheinbreitbach (DE)

(56) Entgegenhaltungen:
- EP-A- 0 230 919
- EP-A- 0 546 484
- WO-A-81/01999
- DE-C- 4 233 553
- DE-C- 4 428 841
- US-A- 4 004 681

## Beschreibung

Die Erfindung betrifft eine Kippschalenanordnung für Sortierförderanlagen mit Mitteln zur Steuerung der Kippbewegung der Kippschale nach dem Oberbegriff des Anspruchs 1.

Eine derartige Anordnung ist bekannt aus der US 4 004 681.

Kippschalensorter sind Sortier- und Verteileinrichtungen, die bei der Warenverteilung mit hoher Sortierleistung eingesetzt werden. Ein Problem beim Einsatz von diesen Sortern ist die große Breite der Abwurfstelle, die mit der Fördergeschwindigkeit des Sorters zusammenhängt. Das Gut wird auf Rutschen oder Förderer ausgeschleust, dabei bremst die Reibung zwischen Gut und Rutsche bzw. Förderer die Horizontalkomponente in Förderrichtung der Geschwindigkeit ab. Je höher die Sortergeschwindigkeiten, desto größer muß die Breite der Abwurfstelle sein. Bei den meisten Sortern wird durch eine einfache Kippbewegung das Gut quer zur Förderrichtung abgeworfen.

Aus der DE 42 33 553 ist eine weitere kippbare Kippschale einer Sortierförderanlage bekannt. Bei der beschriebenen Kippschale wird durch konstruktive Mittel erreicht, daß sie in der horizontalen Transportstellung und der geneigten Kippstellung spielarm geführt ist und daß das Stückgut sicher durch die Kippbewegung abgeworfen wird. Ferner ist das beidseitige Abkippen bei identischer Kippcharakteristik des Stückgutes möglich. Da jedoch auch mit dieser Technik in einer räumlichen Bewegung das Stückgut in Förderrichtung ausgegeben wird, wird es beschleunigt, wodurch die Gefahr der Beschädigung, z.B. durch einen Aufprall auf die Seitenwangen der Endstelle möglich ist.

Der vorliegenden Erfindung liegt daher die Aufgabe zugrunde, den Kippmechanismus der Kippschale so auszugestalten, daß das Gut entgegen der Förderrichtung ausgegeben wird und daß verschiedene Bewegungsabläufe der Kippschale erreichbar sind, wodurch auch verschiedenste Abwurfgeschwindigkeiten und Beschleunigungen in beiden Richtungen der Abwurfebene möglich sind.

Diese Aufgabe ist durch eine Kippschalenanordnung mit den Merkmalen des Anspruchs 1 gelöst. Die Unteransprüche stellen vorteilhafte Weiterbildungen dar.

Aufgrund der kulissengeführten Kippbewegung einer Kippwelle und einer davon unabhängigen Drehbewegung eines Drehkörpers ist es möglich, fast jede gewünschte Bewegungsausführung der Kippschale zu erzielen. Durch die Gestaltung der Weiche als eine Führung, in der die Rolle des Drehhebels gleitet und die damit die Drehbewegung der Kippschale um die Hochachse definiert und die Gestaltung der Kipphebel und der Kulisse, die die Bewegung der Kippwelle festlegen, können verschiedenste Abwurfgeschwindigkeiten und Beschleunigungen in beiden Richtungen der Abwurfebene eingestellt werden. Die Umstellung kann auch nachträglich bei bereits arbeitenden Kippschalenanordnungen durch Austauschen der Weiche und der Kulisse erfolgen. Durch die Möglichkeit der unabhängigen Einstellung der beiden Kippmechanismen, des Drehkörpers und der Kippwelle ist erreicht, daß die Abwurfkinematik so ausgelegt werden kann, daß die Kompensation der Geschwindigkeit in Förderrichtung beim Abwurf in weiten Bereichen unabhängig von der Sortergeschwindigkeit erfolgen kann. Daraus ergibt sich, daß das Gut nach dem Verlassen der Kippschale mit einer gewissen Anfangsgeschwindigkeit nahezu geradlinig in die Endstelle einlaufen kann. Aufgrund des niedrigen Geschwindigkeitsniveaus bleibt die Beschädigungsgefahr beim Anprall an andere Güter oder Begrenzungen der Endstelle gering.

Dadurch, daß die mit der Kulisse zusammenwirkenden Kipphebel mit der Kippwelle lösbar verbunden sind, ist erreicht, daß das Bewegungsverhältnis der Zwangsbewegung zwischen der Kippwelle und dem Drehkörper über die Kulisse einfach verändert werden kann. Sie ist leicht austauschbar und kann somit individuell an die Gut-Bedingungen bzw. Bedingungen des Einsatzfalles angepaßt werden.

Durch das Auslösen der Drehbewegung der Kippschale um den Drehkörper wird über die Kulisse und den Drehhebel eine zwangsgeführte Bewegung der Kippwelle ausgeführt.

Die Drehbewegung des Drehkörpers und die Kippbewegung der Kippwelle sind auf 35° begrenzt. Dieser Winkel ist ausreichend, um die kinematischen Bedingungen für verschiedene Abwurfkinematiken des Gutes von der Kippschale zu gewährleisten.

Im folgenden wird die Erfindung anhand der in den Figuren dargestellten Ausführungsbeispiele näher erläutert. Es zeigen:

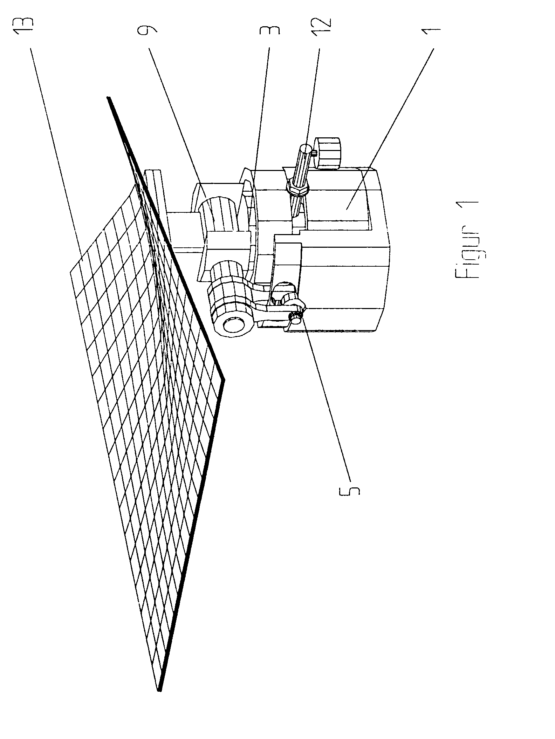

- Fig. 1:: perspektivische Darstellung der Kippschalenanordnung mit der Kippschale,

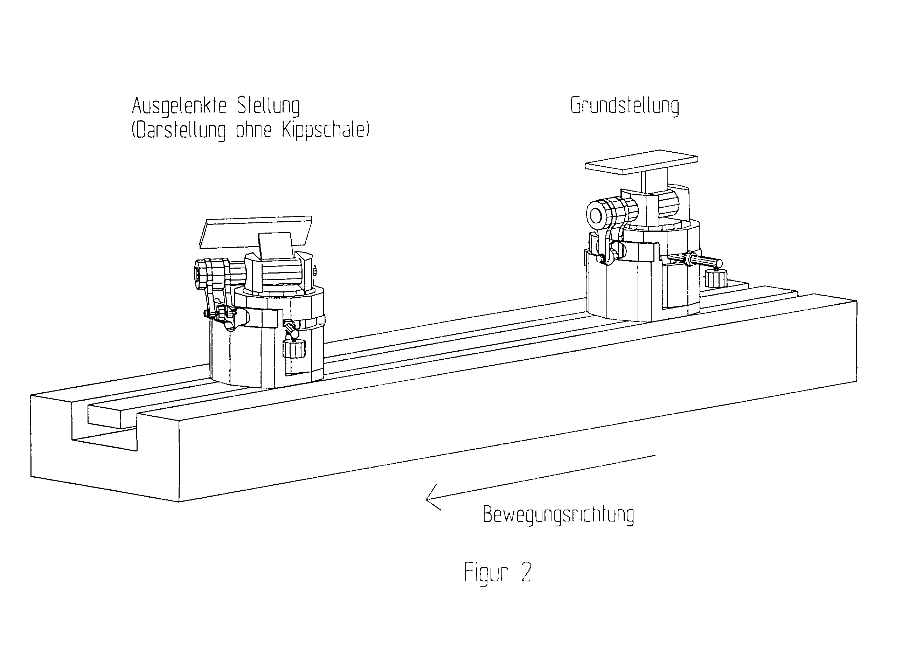

- Fig. 2:: perspektivische Darstellung der Kippschalenanordnung in Grundstellung und in ausgelenkter Stellung in Zuordnung zu einer Grundplatte,

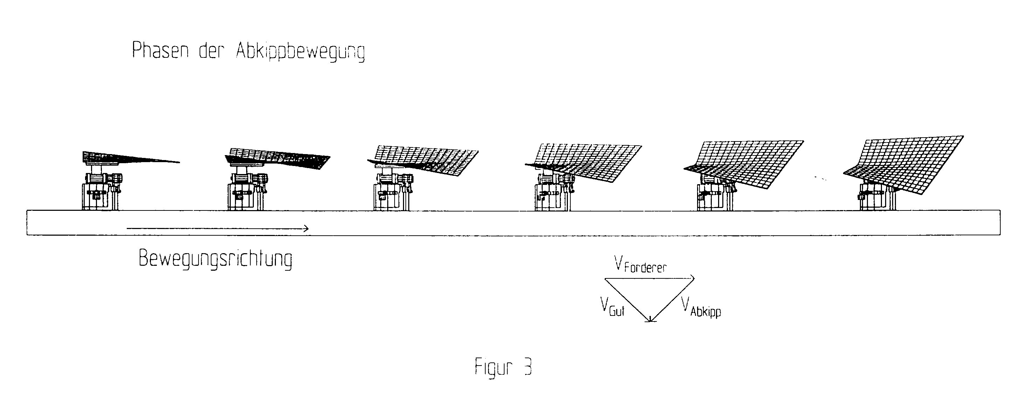

- Fig. 3:: verschiedene Phasen der Abkippbewegung der Kippschale,

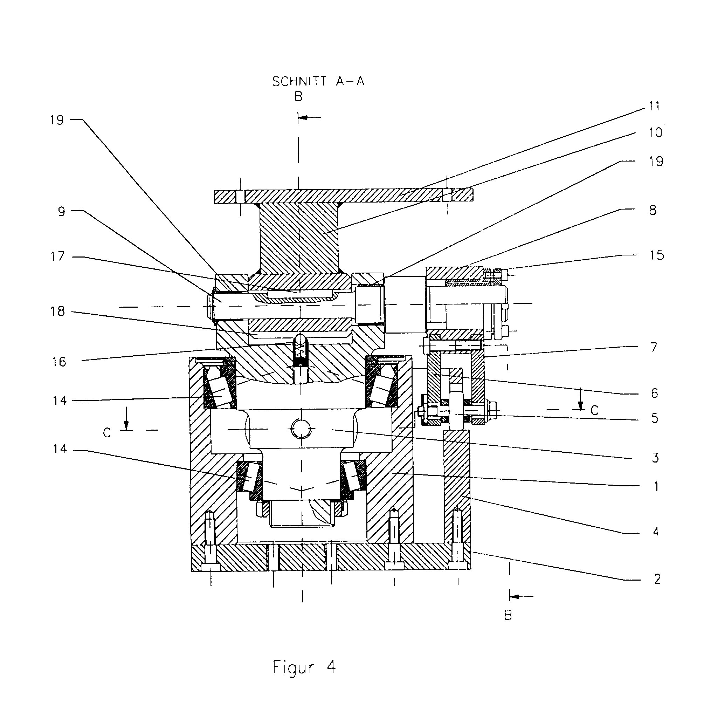

- Fig. 4:: einen Schnitt in Längsrichtung (Fahrtrichtung) der Kippschalenanordnung,

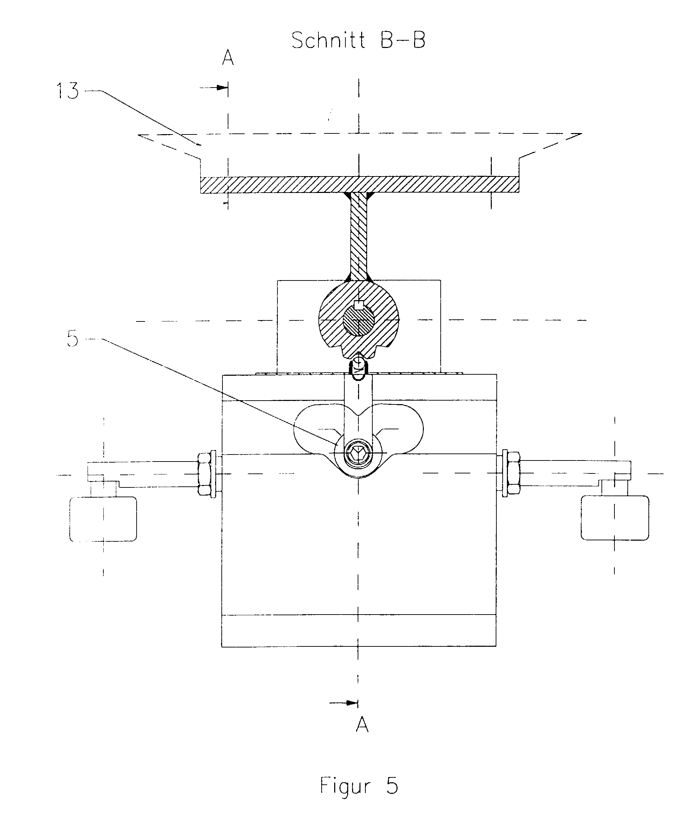

- Fig. 5:: Schnitt B-B der Darstellung der Figur 4,

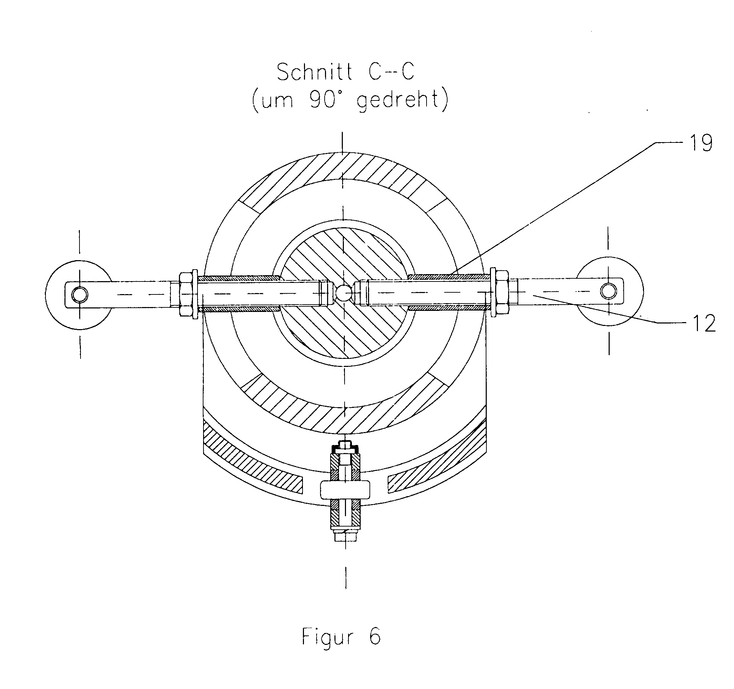

- Fig. 6:: Schnitt C-C der Darstellung der Figur 4,

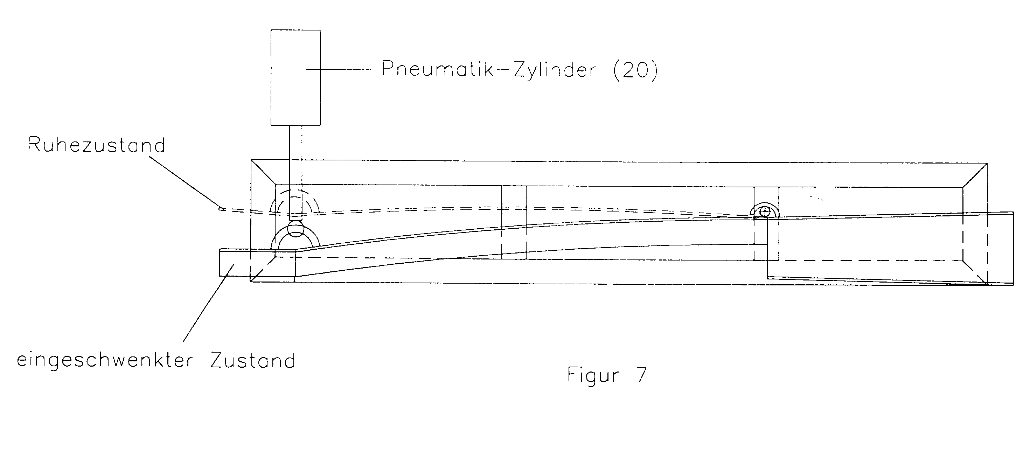

- Fig. 7:: Weiche mit Ausschleuseinrichtung.

Die dargestellte Kippschalenanordnung weist ein Gehäuse 1, das mit einer Grundplatte 2 verbunden ist und in dem ein Drehkörper 3 angeordnet ist, auf. Ferner ist eine Kulissenführung 4 mit der Grundplatte 2 verbunden. Auf der Kulissenführung 4 wälzt ein Führungsrad 5 ab, welches zwischen zwei Kipphebeln 6, 7, die über einen Mitnehmer 8 mit einer Kippwelle 9 verbunden sind, angeordnet ist. Die Kippwelle 9 ist über ein Profil 10 mit einem Kippschalenfuß 11 verbunden und höhenversetzt zu dem Drehkörper 3 angeordnet. Sie ist um ihre Horizontalachse kippbar, der Drehkörper 3 ist um seine vertikale Achse drehbar. Die zwangsgeführte Drehbewegung des Drehkörpers 3 wird durch einen Drehhebel 12 bewirkt. Die gesamte Konstruktion der Kippschalenanordnung weist zwei Drehfreiheitsgrade auf, einen um den Drehkörper 3 und einen weiteren um die Kippwelle 9, d.h. der eine Freiheitsgrad ist der um die Hochachse und der andere Freiheitsgrad ist der um die Längsachse der Kippschale 13 (Fahrtrichtung). Die Auslösung der Kippbewegung wird durch die zwangsgeführte Drehbewegung des Drehhebels 12 in einer Ausschleus-Weiche verursacht. Die Konstruktion der Weiche besteht aus einem Profil, in dem die Rolle des Drehhebels 12 geführt gleiten bzw. abrollen kann. Das Profil ist an einem Ende drehbar gelagert. Zur Einleitung des Abkippvorgangs wird diese Weiche in die Förderstrecke der Kippschale 13 (d.h. in die Bewegungsbahn des Drehhebels 12) eingeschwenkt. Der Einschwenkvorgang wird mittels einer geeigneten Aktorik 20 umgesetzt. Die Weiche kann beliebig gekrümmt sein und somit eine den Anforderungen des Betriebes entsprechende Bewegung der Kippschale 13 bewirken. Da die Krümmungen der Weiche nur in einer Ebene liegen, ist eine einfache die Fertigung derselben möglich. Dadurch dreht sich der Drehkörper 3 in seiner Lagerung aus seiner Ruhelage um maximal 35°. Begrenzt ist die Drehbewegung der Kippschale 13 durch die Kulissenführung 4. Die Lagerung des Drehkörpers 3 besteht aus zwei Kegelrollenlagem 14 in O-Anordnung, um die großen Kippmomente der Kippschale 13 aufzufangen. In der Kulissenführung 4 rollt das Führungsrad 5 ab, das an zwei Kipphebeln 6, 7 angeordnet ist. Die Kipphebel 6, 7 sind auf einem Mitnehmer 8 mit der Kippwelle 9 über eine Spannbuchse 15 lösbar verbunden. Dadurch können die Kipphebel 6, 7 leicht demontiert werden, z.B. um die Form der Kulissenführung 4 auszutauschen. Die Ruhelage der Kippschale 13 bzw. deren Fußes 11 wird mittels eines Drückstückes 16 in den Nuten 18 des Kippschalenfußes 11 fixiert. Die Kulissenform ist so gestaltet, daß eine stoß- und ruckfreie Kippbewegung der Kippschale 13 erzielt wird. In der Mittelstellung ergibt sich eine Totlage der Kipphebel 6, 7, die die Funktion des Druckstückes 16 unterstützt. Die Endstellungen der Kippbewegung nach rechts und links zur Fahrtrichtung werden ebenfalls durch die Endlagen des Führungsrades 5 in der Kulissenführung 4 vorgegeben. Durch das Auslösen der Drehbewegung des Drehkörpers 3 um die vertikale Achse und das Auslösen der zwangsgeführten Drehbewegung der Kippwelle 9 über die Kulissenführung 4 und die Kipphebel 6, 7 kippt die Kippschale 13 um maximal 35° ab, während ihr gleichzeitig die Drehbewegung um die horizontale Achse überlagert wird. Insgesamt ergibt sich dadurch eine Drehkippbewegung der Kippschale 13 entgegen der Fahrtrichtung. Die Kippwelle 9 ist im Drehkörper 3 mittels Gleitlagerbuchsen 19 gelagert und trägt den Fuß 11 der Kippschale 13. Der Fuß 11 ist über eine Paßfeder 17 mit der Kippwelle 9 verbunden.

Die Kippschalenanordnung ist nicht an einen speziellen Sorterkreislauf gebunden, vielmehr kann sie aufgrund der Anordnung auf der Grundplatte 2 auf beinahe jedes Fördermittel aufgesetzt werden. So ist es möglich, neben konventionell umlaufenden Förderketten z. B. auch Elektrohängebahnfahrzeuge damit zu bestücken. Dadurch können in ihrer Leistung individuell konfigurierbare Kippschalensortersysteme aufgebaut werden.

Der komplizierte Abkippvorgang ist gemäß der beschriebenen Anordnung vorteilhaft durch nur drei bewegte Elemente gewährleistet. Diese Elemente führen ausschließlich einfache Rotationsbewegungen aus. Das Führungsrad 5 wälzt auf der Kulissenführung 4 ab, die Kippwelle 9, welche die Kippschale um die Längsachse schwenkt, führt eine Drehbewegung aus und der Drehkörper 3 der die Rotationsbewegung um die Kippschalenhochachse bewirkt, wird ebenfalls lediglich gedreht. Die beiden Drehbewegungen der Kippwelle 9 und des Drehkörpers 3 sind unabhängig voneinander durchführbar und veränderbar. Sie sind nicht miteinander gekoppelt. Das Bewegungsverhältnis der Zwangsbewegung zwischen diesen beiden Bauteilen kann über die Kulissenführung 4 verändert werden. Deshalb ist es vorteilhaft, daß diese leicht austauschbar und somit individuell an die Bedingungen des Einsatzfalles anpaßbar ist.

Die Erhöhung der Drehgeschwindigkeit der Kippschale um die vertikale Achse kann durch eine veränderte Form der Ausschleus-Weiche erfolgen; die Erhöhung der Kippgeschwindigkeit durch eine Veränderung der Kulissenform 4. Sollte es erforderlich sein, aufgrund gestiegener Anforderungen an die Leistung des Sorters die Fördergeschwindigkeit zu erhöhen, kann dies über eine Erhöhung der Drehgeschwindigkeit um die vertikale Achse geschehen. Die Geschwindigkeit um die horizontale Achse, d.h. die Kippgeschwindigkeit der Kippwelle 9 und die Breite der Sorterendstelle (in Förderrichtung) können beibehalten werden.

Durch die Abkippbewegung entgegen der Förderrichtung des Sorters wird die Endstellenbreite minimiert. Während herkömmliche Sorteranlagen nur eine Kippbewegung durchführen, gewährleistet die beschriebene Anordnung die Endstellenbreite durch eine gleichzeitige Drehbewegung der Kippschale 13 zu verringern.

## Patentansprüche

1. Kippschalenanordnung für eine Sortierförderanlage mit Mitteln zur Steuerung der Kippbewegung der Kippschale und mit einem bezüglich einer Grundplatte (2) um eine vertikale Achse drehbaren Drehkörper (3), dessen Drehbewegung über einen Drehhebel (12) bewirkt und gesteuert wird und einer höhenversetzt zu dem Drehkörper (3) angeordneten, eine horizontale Achse bildenden Kippachse **dadurch gekennzeichnet**, daß die Kippachse als drehbare, im Drehkörper (3) gelagerte die Kippschale (13) tragende Kippwelle (9) ausgebildet ist, die an ihrem einen Ende zwei mit ihr lösbar verbundenen Kipphebel (6, 7) aufweist zwischen denen ein in einer mit der Grundplatte (2) verbundenen Kulissenführung (4) abwälzendes Führungsrad (5) angeordnet ist, welches die Drehbewegung der Kippwelle (9) bewirkt und steuert, wobei die Bewegungen des Drehkörpers (3) und der Kippwelle (9) zwangsgeführt unabhängig voneinander stattfinden.

2. Kippschalenanordnung nach Anspruch 1 **dadurch gekennzeichnet, daß** die Drehbewegung des Drehkörpers (3) und die Drehbewegung der Kippwelle (9) auf 35° begrenzt sind.

## Claims

1. Tilting tray arrangement for a sorting conveyor device, having means for controlling the tilting movement of the tilting tray and having a rotating body (3) which is rotatable with respect to a base plate (2) about a vertical axis, the rotational movement of which rotating body is effected and controlled via a rotating lever (12), and having a tilting axle which is disposed vertically offset to the rotating body (3) and forms a horizontal axis, characterised in that the tilting axle is configured as a rotatable tilting shaft (9) which is mounted in the rotating body (3) and supports the tilting tray (13), said tilting shaft having at one of its ends two tilting levers (6, 7) which are detachably connected to said tilting shaft and between which a guiding wheel (5) which rolls in a rocker guide (4) connected to the base plate (2) and effects and controls the rotational movement of the tilting shaft (9), the movements of the rotating body (3) and the tilting shaft (9) taking place independently of each other in a constrained manner.

2. Tilting tray arrangement according to claim 1, characterised in that the rotational movement of the rotating body (3) and the rotational movement of the tilting shaft (9) are restricted to 35°.

## Revendications

1. Agencement de plateaux basculants pour un convoyeur de triage comprenant des moyens de commande du mouvement de basculement des plateaux basculants, avec un organe tournant (3), tournant autour d'un axe vertical par rapport à une plaque de base (2), dont le mouvement de rotation est assuré et commandé par l'intermédiaire d'un levier tournant (12), et avec un axe de basculement, décalé en hauteur par rapport au corps tournant (3) et formant un axe horizontal, caractérisé en ce que
• l'axe de basculement est un axe de basculement (9) monté à rotation dans le corps tournant (3) et portant le plateau basculant (13), cet axe de basculement ayant, à une extrémité, deux leviers basculants (6, 7) reliés de manière amovible à cet axe, entre lesquels une roue de guidage (5) roulant dans une coulisse de guidage (4), reliée à la plaque de base (2), cette roue produisant et commandant le mouvement de rotation de l'axe basculant (9),
• les mouvements de l'organe tournant (3) et de l'axe basculant (9) étant guidés de force, indépendamment l'un de l'autre.

2. Agencement à plateaux basculants selon la revendication 1,
caractérisé en ce que
le mouvement de rotation de l'organe tournant (3) et le mouvement de rotation de l'axe de basculement (9) sont limités à 35°.
